# EUROPÄISCHE PATENTANMELDUNG

(11) **EP 1 036 685 A2**
(43) Veröffentlichungstag der Anmeldung: **20.09.2000**
(21) Anmeldenummer: 00105073.1
(22) Anmeldetag: 10.03.2000
(51) Int. Cl.: B60J 7/22

(54) **Windabweiser für ein Fahrzeugdach**

(30) Priorität: 16.03.1999 DE 19911551
(71) Anmelder: Webasto Vehicle Systems International GmbH, 82131 Stockdorf (DE)
(72) Erfinder: Hirschvogel, Engelbert, 86928 Hofstetten (DE); Staltmayer, Thomas, 82131 Gauting (DE)
(74) Vertreter: Wiese, Gerhard

(57) **Zusammenfassung**

Die Erfindung betrifft einen Windabweiser (20) für ein öffnungsfähiges Fahrzeugdach, der zwischen einer Ruhestellung und einer Funktionsstellung verstellbar ist und dessen Funktionsfläche mindestens zwei relativ zueinander verschiebbare Flächenelemente (22, 24) umfaßt, deren relative Stellung zueinander die Größe der Funktionsfläche bestimmt. Die Flächenelemente sind untereinander so gekoppelt, daß sie zu der relativen Stellung hin vorgespannt sind, in welcher die Funktionsfläche maximal ist.

## Beschreibung

Die vorliegende Erfindung betrifft einen Windabweiser für ein öffnungsfähiges Fahrzeugdach gemaß dem Oberbegriff von Anspruch 1.

Ein solcher gattungsgemäßer Windabweiser ist aus DE 195 20 348 C1 bekannt, welcher einen schwenkbar an einem Dachrahmen des Fahrzeugdachs angeordneten Grundkörper sowie zwei gegenüber dem Grundkörper zur Vergrößerung der Ausstellhöhe verschiebbare Zusatzplatten aufweist. Der Grundkörper und die Zusatzplatten sind in ihren seitlichen Endbereichen mit einer Führungseinrichtung zum Fuhren der jeweils benachbarten Zusatzplatte versehen. Die im ausgestellten Zustand des Windabweisers oberste Zusatzplatte ist mit einem Aussteilhebel verbunden, dessen anderes Ende an dem Dachrahmen gelagert ist und der mittels einer Vorspannfeder derart mit einer Vorspannkraft beaufschlagt ist, daß er den Windabweiser in Richtung der maximalen Ausstellposition vorspannt. Der Windabweiser ist am vorderen Rand einer von einem in Dachlängsrichtung verschiebbaren Deckel verschließbaren Dachöffnung angeordnet und wird bei geschlossenem Deckel von diesem entgegen der Vorspannkraft des Hebels in einer Ruhestellung gehalten, in welcher der Grundkörper und die beiden Zusatzplatten so in einer an dem Dachrahmen ausgebildeten Ablage zusammengeschoben sind, daß die Zusatzplatten und der Grundkörper in Dachlängsrichtung gesehen hintereinander angeordnet sind. Wenn der Deckel beim Öffnen der Dachöffnung auch den vorgespannten Hebel des Windabweisers freigibt, schwenkt dieser mit seinem an der obersten Zusatzplatte befestigten Ende nach oben in Richtung der Vorspannkraft, wodurch der Windabweiser fächerförmig auseinandergezogen und nach oben ausgestellt wird, wobei er seine maximale Funktionsfläche erreicht. In dieser Stellung sind die Zusatzplatten und der Grundkörper im wesentlichen übereinander, d.h. in Höhenrichtung versetzt zueinander, angeordnet.

Es ist Aufgabe der vorliegenden Erfindung, einen Windabweiser zu schaffen, welcher in seiner Ruhestellung nur ein geringes Volumen einnimmt, eine große Funktionsfläche in seiner Funktionsstellung bietet und dennoch auf einfache Weise ohne externe Elemente in seine Funktionsstellung gebracht werden kann.

Diese Aufgabe wird ausgehend von einem Windabweiser gemäß dem Oberbegriff von Anspruch 1 dadurch gelöst, daß die Flächenelemente untereinander so gekoppelt sind, daß sie zu der relativen Stellung hin vorgespannt sind, in welcher die Funktionsfläche maximal ist. Vorteilhafte Ausgestaltungen der Erfindung sind den Unteransprüchen zu entnehmen.

Diese erfindungsgemäße Lösung hat den Vorteil, daß das Einnehmen der maximalen Funktionsfläche nicht durch zusätzliche externe Elemente bewirkt werden muß, was eine Vereinfachung der Windabweiser-Ausstellmechanik erlaubt.

Vorzugsweise wird dabei die Kopplung der Flächenelemente dadurch bewirkt, daß benachbarte Flächenelemente jeweils durch eine zwischen ihnen wirkende Vorspannanordnung vorgespannt sind. Dies erlaubt einen einfachen und platzsparenden Aufbau der Kopplungsmechanik.

Vorzugsweise sind die Flächenelemente dabei teleskopartig ineinander schiebbar. Dies ermöglicht eine einfache und sichere Führung der Flächenelemente relativ zueinander.

Vorzugsweise wird die Vorspannanordnung von Federn gebildet, deren Enden an gegenüberliegenden Flächen benachbarter Flächenelemente anliegen.

In weiterer Ausgestaltung greift ein zu der Funktionsstellung des Windabweisers hin vorgespanntes Verstellelement an dem obersten Flächenelement an, um den Windabweiser zwischen der Ruhestellung und der Funktionsstellung zu verstellen.

Vorzugsweise ist das Verstellelement als mit seinem vorderen Ende ausschwenkbarer, nach oben vorgespannter Schwenkarm ausgebildet, der mit seinem vorderen Ende an dem obersten Flächenelement angelenkt ist und von dem Verschlußelement der Dachöffnung, z.B. einem Schiebedeckel, betätigt wird.

Im folgenden werden zwei Ausführungsformen der Erfindung anhand der beiliegenden Zeichnungen näher erläutert. Dabei zeigt:
- Fig. 1: eine Schnittansicht eines Fahrzeugdaches mit einer ersten Ausführungsform eines erfindungsgemäßen Windabweisers in seiner Ruhestellung;
- Fig. 2: eine Ansicht wie Fig. 1, wobei jedoch der Windabweiser in seiner Funktionsstellung gezeigt ist;
- Fig. 3: eine Ansicht wie Fig. 1, wobei jedoch eine zweite Ausführungsform eines erfindungsgemäßen Windabweisers dargestellt ist;
- Fig. 4: eine Ansicht wie Fig. 3, wobei der Windabweiser jedoch in seiner Funktionsstellung dargestellt ist; und
- Fig. 5: eine Variante zur Fig. 4 mit einem aus drei Flächenelementen bestehenden Windabweiser

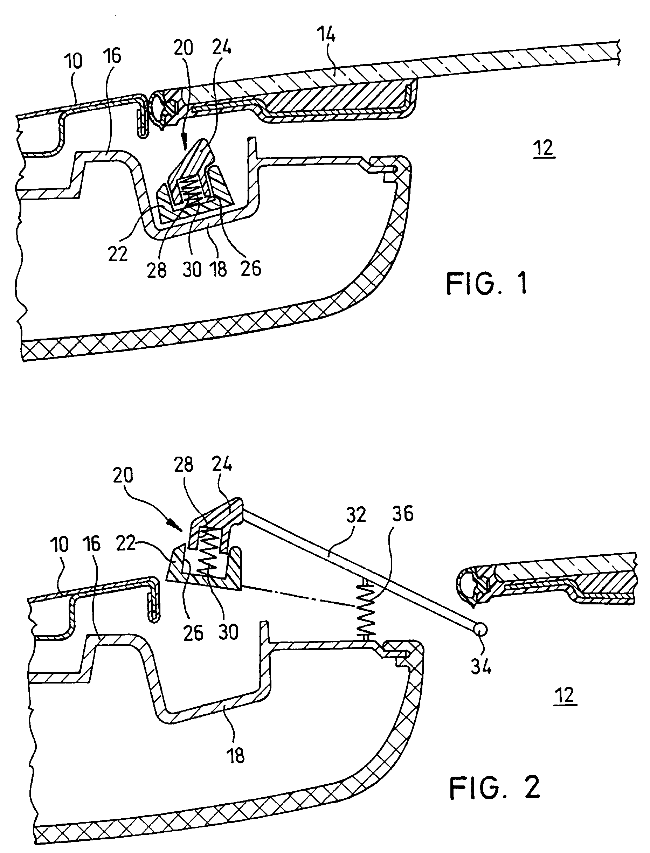

Fig. 1 zeigt ein öffnungsfähiges Fahrzeugdach mit einer Dachöffnung 12 in einer festen Dachhaut 10, die von einem verstellbaren Deckel 14 verschlossen ist. In einer an einem vorderen Rahmenteil eines Dachrahmens 16 vorgesehenen Windabweiserablage 18 befindet sich ein Windabweiser 20 in seiner Ruhestellung, der im wesentlichen einen Grundkörper 22 und einen in dem Grundkörper 22 in Dachhöhenrichtung verschiebbar geführten Zusatzkörper 24 umfaßt. Der Zusatzkörper 24 ist oberhalb des Grundkörpers 22 angeordnet und ist in der in Fig. 1 gezeigten Ruhestellung teleskopartig in den Grundkörper 22 hineingeschoben, der zu diesem Zweck eine Ausnehmung 26 aufweist, um den Zusatzkörper 24 mindestens zum Teil aufzunehmen. Der Zusatzkörper 24 weist eine entgegengesetzt orientierte Ausnehmung 28 auf, in welcher ein Federelement 30 aufgenommen ist, welches den Zusatzkörper 24 nach oben, d.h. von dem Grundkörper 22 weg, vorspannt. Der Zusatzkörper 24 ist mit dem vorderen Ende eines nur in Fig. 2 dargestellten Ausstellhebels 32 verbunden, dessen hinteres Ende 34 schwenkbar gelagert ist und der seinerseits von einer Feder 36 zu der in Fig. 2 dargestellten Ausstellposition hin vorgespannt ist. In bekannter Weise wird der Ausstellhebel 32 in der in Fig. 1 dargestellten Schließposition von dem geschlossenen Deckel 14 mittels eines nicht dargestellten Niederhalters entgegen der Vorspannkraft nach unten gedrückt, wodurch der Hebel 32 seinerseits den Zusatzkörper 24 entgegen der Vorspannkraft der Feder 30 in die Ausnehmung 26 des Grundkörpers 22 hineingeschoben hält.

Wenn der Deckel 14 wie in Fig. 2 dargestellt geöffnet wird, indem er nach hinten geschoben wird, gibt er schließlich den Ausstellhebel 32 frei, wodurch dieser aufgrund der Vorspannkraft des Federelements 30 mit seinem vorderen Ende nach oben ausstellt und dabei den Zusatzkörper 24 des Windabweisers 20 ebenfalls nach oben ausstellt. Sobald der Grundkörper 22 von der Windabweiserablage 18 freikommt, wird er ebenfalls nach oben ausgestellt, bis er im wesentlichen über dem Niveau der festen Dachhaut 10 liegt. Zu diesem Zweck sind der Grundkörper 22 und der Zusatzkörper 24 mechanisch so gekoppelt, daß der Zusatzkörper 24 den Grundkörper 22 mitnimmt, sobald der Zusatzkörper so weit aus der Ausnehmung 26 heraus bewegt wurde, daß der Grundkörper 22 und der Zusatzkörper 24 zusammen die maximale Funktionsfläche des Windabweisers 20 bilden. Die in Fig. 2 dargestellte Position des Windabweisers 20 stellt seine Funktionsstellung dar, in welcher er Fahrtwindgeräusche an der Vorderkante der nun freigelegten Dachöffnung 12 verringert. Die teleskopartige Anordnung des Grundkörpers 22 und des Zusatzkörpers 24 vergrößert die Funktionsfläche des Windabweisers 20 in der Funktionsstellung gegenüber der Ruhestellung. Die relative Vorspannung des Grundkörpers 22 und des Zusatzkörpers 24 voneinander weg mittels des Federelements 30 erhöht die mechanische Stabilität des Windabweisers 20 in der in Fig. 2 dargestellten Funktionsstellung, wodurch Klappergeräusche und ähnliches wirksam unterbunden werden.

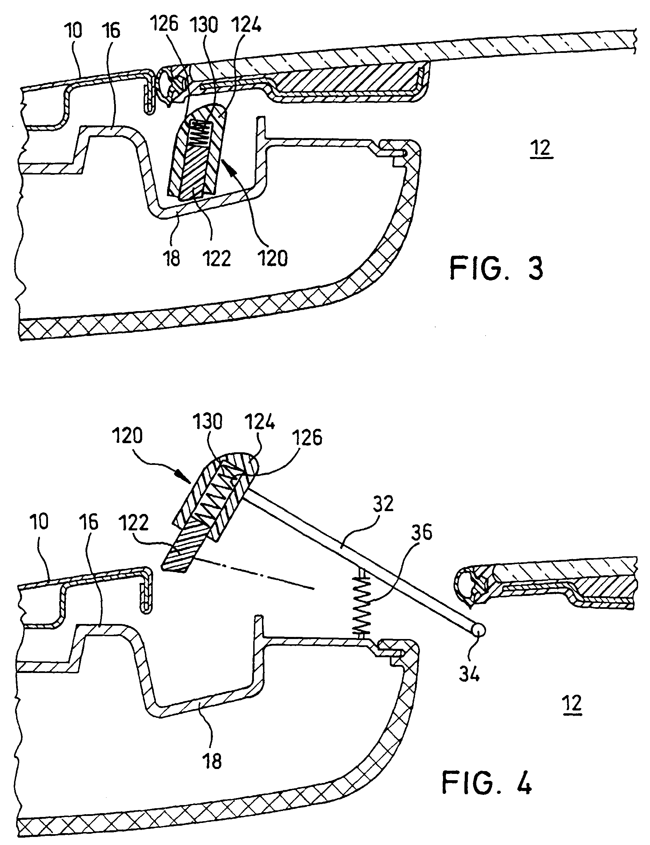

In Fig. 3 und 4 ist ein abgewandelter Windabweiser 120 dargestellt, welcher sich von dem Windabweiser 20 gemäß Fig. 1 und 2 vor allem dadurch unterscheidet, daß der Zusatzkörper 124 eine Ausnehmung 126 aufweist, welche in der Ruhestellung des Windabweisers 120 gemaß Fig. 3 den Grundkörper 122 teleskopartig aufnimmt. Auch bei dieser Ausführungsform sind der Zusatzkörper 124 und der Grundkörper 122 mittels eines Federelements 130 voneinander weg in Richtung der maximalen Funktionsfläche hin vorgespannt, wobei das Federelement 30 ebenfalls in der Ausnehmung 126 des Zusatzkörpers 124 aufgenommen ist und zwischen gegenüberliegenden Flächen des Grundkörpers 122 und des Zusatzkörpers 124 wirkt, nämlich zwischen dem oberen Ende des Grundkörpers 122 und dem oberen Ende der Ausnehmung 126. Auch hier ist der Zusatzkörper 124 mittels des Ausstellhebels 32 ausstellbar, wodurch der Windabweiser 120 aus der in Fig. 3 gezeigten Ruhestellung bei geschlossenem Deckel 14, in welcher der Grundkörper 122 teleskopartig in den Zusatzkörper 124 hinein geschoben ist, in die in Fig. 4 gezeigte Funktionsstellung gebracht wird, in welcher der Windabweiser 120 ausgestellt ist und der Grundkörper 122 durch die Vorspannwirkung des Federelements 130 nahezu vollständig aus dem Zusatzkörper 124 herausgeschoben ist, um die Funktionsfläche des Windabweisers 120 gegenüber der Ruhestellung zu vergrößern. Der Grundkörper 122 ist dabei gleitend in der Ausnehmung 126 geführt.

Während bei der Ausführungsform gemäß Fig. 1 und 2 der Grundkörper 22 und der Zusatzkörper 24 im wesentlichen in der Dachhöhenrichtung relativ zueinander verschiebbar sind, ist die Verschieberichtung bei der Ausführungsform gemäß Fig. 3 und 4 um etwa 30° bezüglich der Dachhöhenrichtung nach hinten geneigt.

Statt zwei Windabweiser-Körpern können, falls erforderlich, grundsätzlich auch drei oder mehr Körper verwendet werden, wodurch das Verhältnis zwischen der Höhenabmessung in der Ruhestellung und der maximalen Funktionsfläche in der Funktionsstellung vergrößert werden kann.

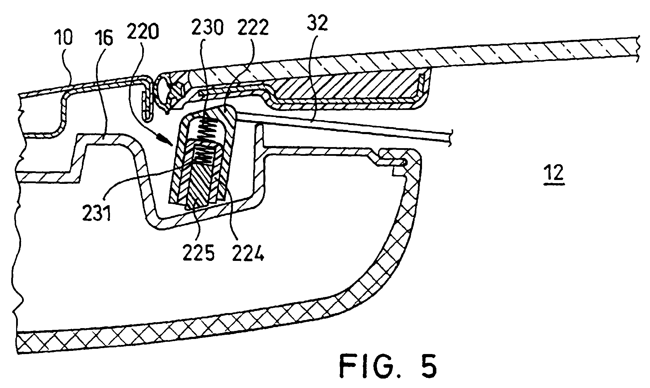

Ein Windabweiser 220 mit 3 ineinander gestaffelt angeordneten Flächenelementen 222, 224 und 225 ist in Fig. 5 dargestellt. Dabei ist der Ausstellhebel 32 am äußeren oberen Flächenelement 222 angelenkt. In einem nach unten geöffneten Aufnahmeschlitz des ersten Flächenelements 222 ist das zweite Flächenelement 224 verschiebbar gelagert, wobei zwischen erstem Flächenelement 222 und zweitem Flächenelement 224 eine Druckfeder 230 angeordnet ist.

Das zweite Flächenelement weist einen nach unten geöffneten Aufnahmeschlitz auf, in welchem das dritte Flächenelement 225 verschiebbar geführt ist. Zwischen zweitem Flächenelement 224 und drittem Flächenelement 225 ist eine Druckfeder 231 angeordnet. Die Druckfedern 230 bzw. 231 sorgen für eine federnde Vorbelastung des Windabweisers 220 in die ausgestellte Betriebsstellung

Bei allen Varianten ist der Ausstellhebel 32 durch die in Fig. 4 angedeutete Feder 36 in Ausstellrichtung federnd vorbelastet, so daß die Federelemente 30, 130, 230 bzw. 231 lediglich dem Verschieben der Flächenelemente zueinander und deren spiel- und klapperfreier Führung dienen. Das Zusammenschieben der Flächenelemente aus der Betriebsposition geschieht durch Auflaufen eines am verschiebbaren Deckel angeordneten Mitnehmerteils auf eine am Austellhebel 32 vorgesehene Rampe.

### Bezugszeichenliste

- feste Dachhaut: **10**
- Dachöffnung: **12**
- Deckel: **14**
- Dachrahmen: **16**
- Windabweiserablage: **18**
- Windabweiser: **20, 120, 220**
- Grundkörper: **22, 122, 222**
- Zusatzkörper: **24, 124, 224, 225**
- Ausnehmung in 22 bzw. 124: **26, 126**
- Ausnehmung in 24: **28**
- Federelement: **30, 130, 230, 231**
- Ausstellhebel: **32**
- Anlenkpunkt von 32: **34**
- Vorspannfeder von 32: **36**

## Patentansprüche

1. Windabweiser für ein öffnungsfähiges Fahrzeugdach, der zwischen einer Ruhestellung und einer Funktionsstellung verstellbar ist und dessen Funktionsfläche mindestens zwei relativ zueinander verschiebbare Flächenelemente (22, 24; 122; 124; 222, 224, 225) umfaßt, deren relative Stellung zueinander die Größe der Funktionsfläche bestimmt, **dadurch gekennzeichnet,** daß die Flächenelemente (22, 24; 122, 124; 222, 224, 225) untereinander so gekoppelt sind, daß sie zu der relativen Stellung hin vorgespannt sind, in welcher die Funktionsfläche maximal ist.

2. Windabweiser nach Anspruch 1, **dadurch gekennzeichnet,** daß die Koppelung der Flächenelemente (22, 24; 122, 124; 222, 224, 225) dadurch bewirkt wird, daß benachbarte Flächenelemente jeweils durch zwischen ihnen wirkende Federelemente (30, 130, 230, 231) vorgespannt sind.

3. Windabweiser nach Anspruch 1, **dadurch gekennzeichnet,** daß die Koppelung der Flächenelemente (22, 24; 122, 124; 222, 224, 225) dadurch bewirkt wird, daß die Flächenelemente durch wenigstens ein zwischen dem ersten und dem letzten Flächenelement wirkendes Federelement (30, 130, 230, 231) vorgespannt sind.

4. Windabweiser nach einem der vorhergehenden Ansprüche, **dadurch gekennzeichnet,** daß die Flächenelemente (22, 24; 122, 124; 222, 224, 225) teleskopartig ineinander schiebbar sind.

5. Windabweiser nach Anspruch 4, **dadurch gekennzeichnet,** daß die Federelemente (30, 130, 230, 231) an gegenüberliegen Flächen benachbarter Flächenelemente (22, 24; 122, 124; 222 224, 225) anliegen.

6. Windabweiser nach einem der Ansprüche 1 bis 5 **dadurch gekennzeichnet,** daß an dem obersten Flächenelement (24, 124, 222) ein zu der Funktionsstellung hin vorgespanntes Verstellelement (32) angreift, um den Windabweiser (20, 120, 220) zwischen der Ruhestellung und der Funktionsstellung zu verstellen.

7. Windabweiser nach Anspruch 6, **dadurch gekennzeichnet,** daß der Windabweiser (20, 120, 220) für eine von einem verschiebbaren Verschlußelement (14) verschließbare bzw. freigebbare Dachöffnung (12) vorgesehen ist, wobei das Verstellelement (32) von dem Verschlußelement betätigt wird.

8. Windabweiser nach Anspruch 7, **dadurch gekennzeichnet,** daß das Verstellelement (32) auf jeder Seite als mit seinem vorderen Ende ausschwenkbarer, nach oben vorgespannter Schwenkarm ausgebildet ist, der mit seinem vorderen Ende an dem obersten Flächenelement (24, 124, 222) angelenkt ist.

9. Windabweiser nach Anspruch 9, **dadurch gekennzeichnet,** daß die Flächenelemente (22, 24; 122, 124; 222, 224, 225) in der Ruhestellung in einer unterhalb des Dachniveaus liegenden Ablage (18) aufgenommen sind, wobei die Flächenelemente durch die Schwenkarme (32), welche bei geschlossenem Verschlußelement entgegen ihrer Vorspannkraft von diesem niedergedrückt wird, entgegen der Vorspannkraft der Federelemente (30, 130, 230, 231) gegen den Boden der Ablage (18) zusammengeschoben sind, während die Flächenelemente in der Funktionsstellung durch die Schwenkarme über das Dachniveau angehoben sind.

10. Windabweiser nach einem der vorhergehenden Ansprüche, **dadurch gekennzeichnet,** daß die Richtung der relativen Verschiebung der Flächenelemente (22, 24; 122, 124; 222, 224, 225) zwischen etwa 90^{°} und etwa 45^{°} zur Dachebene beträgt.

11. Windabweiser nach einem der vorhergehenden Ansprüche, **dadurch gekennzeichnet,** daß die Kontur der Flächenelemente (22, 24; 122, 124; 222, 224, 225) so gestaltet ist, das deren vordere Flächen in der Funktionsstellung ein gemeinsames, weitestgehend glattflächiges Windleitprofil bilden.
